# EUROPÄISCHE PATENTANMELDUNG

(11) **EP 3 434 928 A1**
(43) Veröffentlichungstag der Anmeldung: **30.01.2019**
(21) Anmeldenummer: 18166052.3
(22) Anmeldetag: 06.04.2018
(51) Int. Cl.: F16F 1/373

(54) **SCHWINGUNGSDÄMPFUNGSELEMENT**

(30) Priorität: 26.07.2017 DE 102017116860
(71) Anmelder: ebm-papst Landshut GmbH, 84030 Landshut (DE)
(72) Erfinder: Dannemann, Jan, 84028 Landshut (DE); Weltzer, Jan, 84032 Landshut (DE); Sachsenhauser, Andreas, 84034 Landshut (DE); Deininger, Martin, 84144 Geisenhausen (DE)
(74) Vertreter: Staeger & Sperling Partnerschaftsgesellschaft mbB

(57) **Zusammenfassung**

Die Erfindung betrifft ein Schwingungsdämpfungselement (1) ausgebildet zur Schwingungsentkopplung eines Elektromotors, mit ersten und zweiten Anbindungsmitteln zur Anbindung des Schwingungsdämpfungselements (1) an zu entkoppelnden Bauteilkomponenten, wobei das Schwingungsdämpfungselement (1) eine Rotationsachse (11) aufweist und um die Rotationsachse (11) rotationssymmetrisch sowie gegenüber einer senkrecht zur Rotationsachse stehenden Symmetrieebene (12) spiegelsymmetrisch ausgebildet ist.

## Beschreibung

Die Erfindung betrifft ein Schwingungsdämpfungselement, das zur Schwingungsentkopplung eines Elektromotors gegenüber angrenzenden Bauteilen, wie einem Gebläsegehäuse eines von dem Elektromotor anzutreibenden Gebläses ausgebildet ist.

Gattungsgemäße Schwingungsdämpfungselemente sind beispielsweise in der EP 2 655 918 A1 offenbart. Derartige Schwingungsdämpfungselemente funktionieren in der Praxis sehr gut, sind jedoch aufgrund ihrer komplexen Form und enthaltenen Hinterschneidungen aufwendig herzustellen und bei der Montage bezüglich ihrer korrekten Anordnung und Ausrichtung stets zu überprüfen.

Der Erfindung liegt deshalb die Aufgabe zugrunde, ein Schwingungsdämpfungselement bereit zu stellen, das einfacher herstellbar und leichter sowie schneller montierbar ist.

Diese Aufgabe wird durch die Merkmalskombination gemäß Patentanspruch 1 gelöst.

Erfindungsgemäß wird ein Schwingungsdämpfungselement vorgeschlagen, das zur Schwingungsentkopplung eines Elektromotors ausgebildet ist und erste und zweite Anbindungsmittel zur Anbindung des Schwingungsdämpfungselements an zu entkoppelnden Bauteilkomponenten umfasst. Das Schwingungsdämpfungselement weist eine Rotationsachse auf und ist um die Rotationsachse rotationssymmetrisch sowie gegenüber einer senkrecht zur Rotationsachse stehenden Symmetrieebene spiegelsymmetrisch ausgebildet. Als zu entkoppelnde Bauteilkomponenten sind beispielsweise Teile des Elektromotors wie Motorträger, Lagerschilde oder dergleichen sowie Bauteile, an denen der Elektromotor angeschlossen wird, wie beispielsweise Gebläsegehäuse oder deren Teile definiert.

Die zweifach symmetrische Ausbildung des Schwingungsdämpfungselements gewährleistet einen Bauteilkörper, der bezüglich seiner Positionierung und Ausrichtung beliebig einsetzbar ist. Es muss bei der Montage nicht auf gegenüber den zu entkoppelnden Bauteilkomponenten zuzuordnende Seiten geachtet werden, da das Schwingungsdämpfungselement in jeder beliebigen Ausrichtung einsetzbar ist. Eine sonst zwingend notwendige Nachkontrolle entfällt ebenfalls. Das erfindungsgemäße Schwingungsdämpfungselement ist zudem kostengünstiger.

In einer vorteilhaften Ausführungsvariante ist das Schwingungsdämpfungselement einstückig ausgebildet. Als bevorzugtes Material wird Silikonkautschuk verwendet. Zur Gewährleistung der Eigenschaften zur Schwingungsdämpfung bzw. Schwingungsentkopplung ist das Schwingungsdämpfungselement elastisch oder zumindest teilelastisch. Dabei ist das Schwingungsdämpfungselement derart gestaltet ist, dass es mit einem einfachen Werkzeug fertigbar ist, wobei die Anbindungsmitteln durch Hinterschnitte gebildet sind und das Schwingungsdämpfungselement durch seine elastische Ausbildung entformbar bleibt.

Eine Ausführung des Schwingungsdämpfungselements sieht vor, dass es als Hohlkörper mit Außendurchmesser und Innendurchmesser ausgebildet ist. In einer Weiterbildung ist das Schwingungsdämpfungselement im Wesentlichen vollständig, zumindest aber zwischen den ersten und zweiten Anbindungsmitteln ein Hohlzylinder mit dem entsprechenden Außen- und Innendurchmesser. Dabei ist der Hohlraum vorteilhafterweise vollständig elementfrei und mithin ebenfalls zylindrisch als axiale Durchgangsöffnung mit rundem Querschnitt geformt. Das zylindrische bzw. über wesentliche Abschnitte zylindrische Schwingungsdämpfungselement ist um seine Rotationsachse rotationssymmetrisch und gegenüber der senkrecht zur Rotationsachse stehenden mittigen Axialebene (Symmetrieebene) spiegelsymmetrisch.

Zur Schwingungsentkopplung bei gleichzeitige geringem Gewicht hat sich als günstig erwiesen, wenn das Verhältnis von Außendurchmesser zu Innendurchmesser in einem Wertebereich von 1,8 - 2,2, vorzugsweise bei einem Wert von 2 liegt.

Ferner ist bei dem Schwingungsdämpfungselement erfindungsgemäß vorgesehen, dass die ersten und zweiten Anbindungsmittel jeweils als umlaufende Einknöpfnut ausgebildet sind. Die Einknöpfnuten sind formidentisch und erstrecken sich in einer den Außendurchmesser bestimmenden Außenfläche des Schwingungsdämpfungselements. Dabei sind die Einknöpfnuten so gestaltet, dass sie über die elastischen Werkstoffeigenschaften entformbar sind.

Eine Weiterbildung des Schwingungsdämpfungselements sieht zudem vor, dass seine axialen Außenrandabschnitte, die sich der jeweils umlaufenden Einknöpfnut nach axial außen anschließen, zumindest abschnittsweise konisch zulaufend ausgebildet sind.

Bezüglich der Geometrie und Formgebung des Schwingungsdämpfungselements hat sich als vorteilhaft erwiesen, dass die Einknöpfnuten zueinander einen axialen Längenabstand aufweisen, der 50-80%, weiter bevorzugt 60 - 80% der axialen Gesamtlänge des Schwingungsdämpfungselements entspricht. Als weiterer Bezugspunkt kann festgelegt werden, dass die Einknöpfnuten zueinander einen axialen Längenabstand aufweisen, der dem 1,8 - 2,2-fachen, insbesondere dem doppelten Außendurchmesser des Schwingungsdämpfungselements entspricht.

Zudem ist günstig, wenn das Schwingungsdämpfungselement dadurch gekennzeichnet ist, dass die axiale Gesamtlänge dem 1,8 - 2,5-fachen, insbesondere dem doppelten des Außendurchmessers des Schwingungsdämpfungselements entspricht.

Die Erfindung umfasst zudem ein Gebläse mit einem Gebläsegehäuse und einem daran angeordneten Elektromotor, wobei der Elektromotor gegenüber dem Gebläsegehäuse über mindestens drei der vorstehend beschriebenen Schwingungsdämpfungselemente schwingungsentkoppelt angeordnet ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht eines Ausführungsbeispiels eines Schwingungsdämpfungselements;
- Fig. 2: eine Seitenansicht des Schwingungsdämpfungselements aus Figur 1;
- Fig. 3: eine Draufsicht des Schwingungsdämpfungselements aus Figur 1.

Gleiche Bezugszeichen benennen gleiche Teile in allen Ansichten.

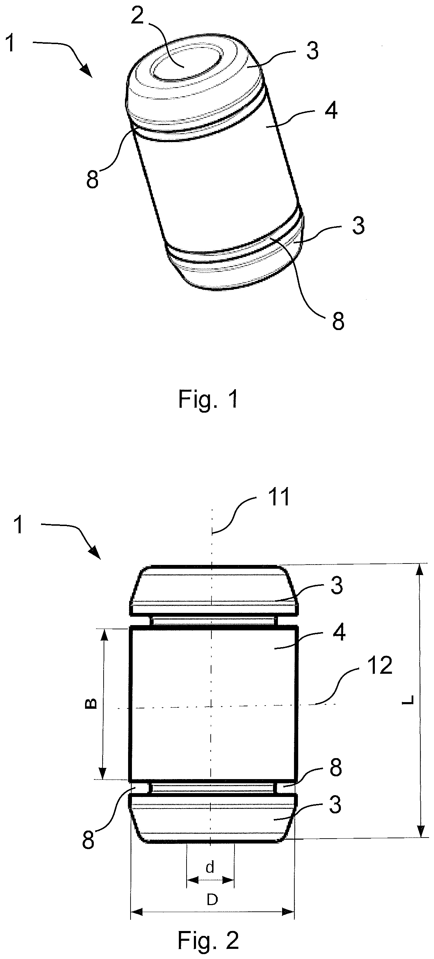

Die Figuren 1 und 2 zeigen ein Ausführungsbeispiel eines einstückigen Schwingungsdämpfungselements 1 zur Schwingungsentkopplung eines Elektromotors in perspektivischer und seitlicher Ansicht. Das Schwingungsdämpfungselement 1 ist bezüglich seiner Rotationsachse 11 rotationssymmetrisch sowie gegenüber seiner senkrecht zur Rotationsachse 11 stehenden Axial-Symmetrieebene 12 spiegelsymmetrisch als Hohlzylinder mit einer in axialer Richtung das Schwingungsdämpfungselement 1 vollständig durchdringenden Durchgangsöffnung 2 ausgebildet. In einer Reihenfolge entlang der axialen Richtung umfasst das Schwingungsdämpfungselement 1 einen axialen Außenrandabschnitt 3, gefolgt von einem Abschnitt eines Hohlzylinders 4 und einem weiteren axialen Außenrandabschnitt 3, wobei die axialen Außenrandabschnitte 3 jeweils sich nach axial außen konisch verjüngend ausgebildet sind.

Die axialen Außenrandabschnitte 3 sind durch jeweils auf der Außenfläche eingebrachte umlaufende Einknöpfnuten 8 begrenzt, mit dem das Schwingungsdämpfungselement 1 an den zu entkoppelnden Bauteilkomponenten befestigt wird.

Der Hohlzylinder 4 weist einen Außendurchmesser D und einen Innendurchmesser d der Durchgangsöffnung 2 auf, deren Verhältnis D/d=2 ist. Die Einknöpfnuten 8 haben zueinander den axialen Längenabstand B, der 60% der axialen Gesamtlänge L des Schwingungsdämpfungselements 1 entspricht. Zudem entspricht die axiale Gesamtlänge L dem 2,2-fachen des Außendurchmessers D des Schwingungsdämpfungselements 1.

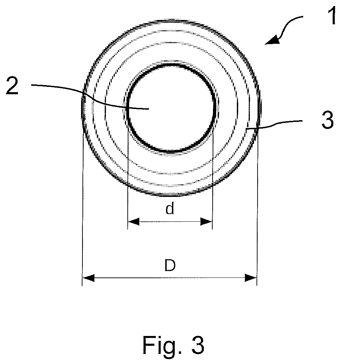

Figur 3 zeigt das Schwingungsdämpfungselement 1 in der Draufsicht, wobei zu erkennen ist, dass die gesamte Durchgangsöffnung 2 elementfrei ausgebildet ist und der Innendurchmesser d über die gesamte Erstreckung konstant ist.

## Patentansprüche

1. Schwingungsdämpfungselement (1) ausgebildet zur Schwingungsentkopplung eines Elektromotors, mit ersten und zweiten Anbindungsmitteln zur Anbindung des Schwingungsdämpfungselements (1) an zu entkoppelnden Bauteilkomponenten, wobei das Schwingungsdämpfungselement (1) eine Rotationsachse (11) aufweist und um die Rotationsachse (11) rotationssymmetrisch sowie gegenüber einer senkrecht zur Rotationsachse (11) stehenden Symmetrieebene (12) spiegelsymmetrisch ausgebildet ist, wobei die ersten und zweiten Anbindungsmittel jeweils als umlaufende Einknöpfnut (8) ausgebildet sind.

2. Schwingungsdämpfungselement nach Anspruch 1, **dadurch gekennzeichnet, dass** es einstückig ausgebildet ist.

3. Schwingungsdämpfungselement nach Anspruch 1 oder 2, **dadurch gekennzeichnet, dass** es elastisch ausgebildet und derart gestaltet ist, dass es mit einem einfachen Werkzeug fertigbar ist, wobei die Anbindungsmittein durch Hinterschnitte gebildet sind und das Schwingungsdämpfungselement durch seine elastische Ausbildung entformbar bleibt.

4. Schwingungsdämpfungselement nach einem der vorigen Ansprüche, **dadurch gekennzeichnet, dass** es zumindest zwischen den ersten und zweiten Anbindungsmitteln als Hohlzylinder (4) mit einem Außendurchmesser (D) und einem Innendurchmesser (d) ausgebildet ist.

5. Schwingungsdämpfungselement nach einem der vorigen Ansprüche, **dadurch gekennzeichnet, dass** es als Hohlkörper mit einem Außendurchmesser (D) und einem Innendurchmesser (d) ausgebildet ist.

6. Schwingungsdämpfungselement nach einem der vorigen Ansprüche 4 bis 5, **dadurch gekennzeichnet, dass** ein Verhältnis von Außendurchmesser (D) zu Innendurchmesser (d) in einem Wertebereich von 1,8 - 2,2, insbesondere bei einem Wert von 2 liegt.

7. Schwingungsdämpfungselement nach Anspruch 1, **dadurch gekennzeichnet, dass** axiale Außenrandabschnitte (3) des Schwingungsdämpfungselements (1), die sich der jeweils umlaufenden Einknöpfnut (8) nach axial außen anschließen, zumindest abschnittsweise konisch zulaufend ausgebildet sind.

8. Schwingungsdämpfungselement nach einem der vorigen Ansprüche 1 oder 7, **dadurch gekennzeichnet, dass** die Einknöpfnuten (8) in einer den Außendurchmesser (D) bestimmenden Außenfläche ausgebildet sind.

9. Schwingungsdämpfungselement nach einem der vorigen Ansprüche 1 oder 7 bis 9, **dadurch gekennzeichnet, dass** die Einknöpfnuten (8) zueinander einen axialen Längenabstand (B) aufweisen, der 50-80% einer axialen Gesamtlänge (L) des Schwingungsdämpfungselements (1) entspricht.

10. Schwingungsdämpfungselement nach einem der vorigen Ansprüche 1 oder 7 bis 9, **dadurch gekennzeichnet, dass** die Einknöpfnuten (8) zueinander einen axialen Längenabstand (B) aufweisen, die dem 1,8 - 2,2-fachen Außendurchmesser (D) des Schwingungsdämpfungselements (1) entspricht.

11. Schwingungsdämpfungselement nach einem der vorigen Ansprüche 9 bis 10, **dadurch gekennzeichnet, dass** die axiale Gesamtlänge (L) dem 1,8 - 2,5-fachen des Außendurchmessers (D) des Schwingungsdämpfungselements (1) entspricht.

12. Schwingungsdämpfungselement nach einem der vorigen Ansprüche, **dadurch gekennzeichnet, dass** es aus Silikonkautschuk gebildet ist.

13. Gebläse mit einem Gebläsegehäuse und einem daran angeordneten Elektromotor, wobei der Elektromotor gegenüber dem Gebläsegehäuse über mindestens drei der Schwingungsdämpfungselemente gemäß einem der Ansprüche schwingungsentkoppelt angeordnet ist.
